# EUROPÄISCHE PATENTSCHRIFT

(11) **EP 0 963 566 B1**
(45) Veröffentlichungstag und Bekanntmachung des Hinweises auf die Patenterteilung: **08.08.2001**
(21) Anmeldenummer: 98914829.1
(22) Anmeldetag: 27.02.1998
(51) Int. Cl.: G02B 6/42

(54) **ELEKTROOPTISCHE KOPPELBAUGRUPPE**
ELECTRO OPTICAL COUPLING ASSEMBLY
ENSEMBLE DE COUPLAGE ELECTRO-OPTIQUE

(30) Priorität: 28.02.1997 DE 19709842
(43) Veröffentlichungstag der Anmeldung: 15.12.1999
(73) Patentinhaber: Infineon Technologies AG, 81669 München (DE)
(72) Erfinder: PLICKERT, Volker, D-14656 Brieselang (DE); MELCHIOR, Lutz, D-12559 Berlin (DE)
(74) Vertreter: Zedlitz, Peter, Dipl.-Inf.
(86) Internationale Anmeldenummer: DE9800588
(87) Internationale Veröffentlichungsnummer: WO9838539

(56) Entgegenhaltungen:
- US-A- 5 163 113
- US-A- 5 535 296
- FOSSUM E R: "Photonic interconnections: more bandwidth, less real estate" PHOTONICS SPECTRA, MAY 1987, USA, Bd. 21, Nr. 5, ISSN 0191-0647, Seiten 151-157, XP002073308 in der Anmeldung erwähnt
- PATENT ABSTRACTS OF JAPAN vol. 095, no. 009, 31.Oktober 1995 & JP 07 162098 A (FUJITSU LTD), 23.Juni 1995,

## Beschreibung

Die Erfindung liegt auf dem Gebiet mehrkanaliger elektrooptischer Verbindungen und betrifft eine elektrooptische Koppelbaugruppe mit einem ersten Träger mit Ausrichtmitteln und mit mehreren in einer Ebene angeordneten Lichtwellenleitern, deren kopplungsseitige Stirnflächen eine Strahlumlenkung auf den Lichtwellenleitern zugeordnete optisch aktive Oberflächen eines mehrkanaligen elektrooptischen Wandlers bewirken, und mit einem zweiten Träger mit auf die Ausrichtmittel des ersten Trägers abgestimmten weiteren Ausrichtmitteln, auf dem der elektrooptische Wandler unabhängig von den Lichtwellenleitern und präzise in bezug auf die weiteren Ausrichtmittel positioniert ist.

Im Rahmen der Erfindung wird unter einem Lichtwellenleiter jede Vorrichtung zur räumlich begrenzt geführten Weiterleitung eines optischen Signals verstanden, insbesondere konfektionierte Lichtwellenleiter und sogenannte Waveguides. Weiterhin wird unter einem elektrooptischen Wandler sowohl ein Sende- als auch ein Empfangselement verstanden, (z. B. Lichtemitterdioden, oberflächenemittierende Laserdioden sowie Photodioden), wobei die optisch aktive Oberfläche des Wandlers bei einem Sender eine lichtabstrahlende bzw. bei einem Empfänger eine lichtempfindliche Oberfläche ist.

Aus der EP 0 713 112 A1 ist eine optische Sende- und Empfangseinrichtung mit einem ersten Träger bekannt, auf dem in einer Ausnehmung ein Sendeelement angeordnet ist. Ein zweiter Träger ist zur Aufnahme eines Lichtwellenleiters an seiner Unterseite mit einer Nut versehen. Der Lichtwellenleiter endet an einer zur Nut querstehenden und im Querschnitt dreieckigen Erhebung, die die Nut von einer Ausnehmung an der Unterseite des zweiten Trägers trennt. Die beiden Träger sind auf einander gegenüberliegenden Seiten eines Zwischenkörpers angeordnet, wobei der erste Träger mit seinem Sendeelement der Unterseite des zweiten Trägers zugewandt ist. Die Ankopplung des Lichtwellenleiters an das Sendeelement erfolgt durch Reflexion des vom Sendeelement emittierten Strahlenbündels an einer Seite der Erhebung. Für eine ausreichende Koppeleffizienz ist zusätzlich auf dem Zwischenkörper eine das Strahlenbündel fokussierende Linse vorgesehen. Die Ausrichtung der beiden Träger zueinander erfordert Justagekugeln, die mit zwischenkörperseitigen und trägerseitigen Vertiefungen zusammenwirken. Die Sende- und Empfangseinrichtung ist fertigungstechnisch aufwendig, weil die Justagekugeln als separate Elemente gehandhabt werden müssen, und verlustbehaftet, da das Strahlenbündel den Zwischenkörper durchdringen muß.

Der Aufsatz "PHOTONIC INTERCONNECTIONS: MORE BANDWIDTH, LESS REAL ESTATE" von Eric R. Fossum in PHOTONICS SPECTRA, Mai 1987, Seiten 151 bis 157 beschreibt eine elektrooptische Koppelbaugruppe mit einem ersten Silizium-Träger, in den V-Nuten eingeätzt sind. In die Nuten eingelegte Lichtwellenleiterenden werden zusammen mit einer Endseite des Silizium-Trägers schräg poliert. Über die damit gebildeten schrägen Stirnflächen gelangt in den Lichtwellenleiterenden geführte Strahlung auf planar strukturierte optische Empfänger. Die für einen hohen Kopplungswirkungsgrad notwendige laterale Justage der Lichtwellenleiterenden in bezug auf die Empfänger ist vergleichsweise aufwendig und in dem genannten Aufsatz nicht näher beschrieben.

Die US-PS 5,535,296 beschreibt eine elektrooptische Koppelbaugruppe mit einem Grundträger, auf dem ein erster Träger mit mehreren in einer Ebene angeordneten Lichtwellenleiterenden und ein zweiter Träger mit elektrooptischen Wandlern angeordnet ist. Die beiden Träger werden mit Hilfe von zwei Ausrichtstiften, die in präzise gefertigte Durchgangsöffnungen des ersten Trägers eingeführt sind, zueinander ausgerichtet, indem die Reihe des zweiten. Trägers exakt gemäß dem lichten Abstand zwischen den beiden Stiften bemessen ist. Der Strahlengang verläuft geradlinig zwischen den Lichtwellenleiterenden und den zugeordneten optisch aktiven Oberflächen der Wandler.

Eine elektrooptische Koppelbaugruppe der eingangs genannten Art geht aus der EP 0 699 931 A1 hervor. Ein erster Träger enthält Lichtwellenleiter, deren Stirnflächen geschrägt sind. Auf einem zweiten Träger ist ein elektrooptischer Wandler derart aufmontiert, daß die optisch empfindlichen Flächen des Wandlers dem zweiten Träger abgewandt sind. Vom Wandler emittierte Strahlen werden durch Totalreflektion an der Stirnfläche des jeweils zugeordneten Lichtwellenleiters eingekoppelt. Zur gemeinsamen Ausrichtung des Wandlers und des ersten Trägers sind zueinander korrespondierende Metallisierungen sowohl auf dem ersten und zweiten Träger, als auch auf dem Wandler und dem zweiten Träger vorgesehen. Die Metallisierungen sind derart angeordnet, daß bei deckungsgleicher Überlagerung korrespondierender Metallisierungen Lichtwellenleiter und Wandler zueinander ausgerichtet sind. Dabei wird die Oberflächenspannung von die Metallisierungen benetzendem Lot ausgenutzt, welches bei der Montage verflüssigt und nachfolgend verfestigt wird. Die dabei auftretenden thermischen Spannungen können nach erfolgter Montage der beiden Träger zu einer Dejustierung führen.

Es ist daher Aufgabe der Erfindung, eine Koppelbaugruppe zu schaffen, die eine einfache und spannungsfreie Justage von Lichtwellenleiter und Wandler zueinander ermöglicht.

Diese Aufgabe wird bei einer Koppelbaugruppe der eingangs angegebenen Art erfindungsgemäß dadurch gelöst, daß der erste Träger ein Kunststofformkörper ist und daß die Ausrichtmittel von korrespondierenden schrägen Flächen auf beiden Trägern gebildet sind, wobei sich die Flächen in einer Dimension parallel zu den Längsachsen der Lichtwellenleiter erstrecken, wobei die Flächen in Ebenen liegen, die die Ebene der Lichtwellenleiter schneiden und wobei die Flächen einen Formschluß bewirken, wodurch die Stirnflächen gegenüber den optisch aktiven Oberflächen lateral justiert sind.

Erfindungsgemäß erfolgt die Ausrichtung des Lichtwellenleiters und des Wandlers zueinander durch die mechanische Wechselwirkung der miteinander korrespondierenden trägerseitigen Flächen. Die erfindungsgemäße Anordnung kommt vorteilhafterweise ohne separate, zusätzliche Justagekörper aus. Der Formschluß der Flächen bewirkt die Ausrichtung der beiden Träger zueinander zumindest in zwei Dimensionen. Die Flächen gestatten nur noch eine relative Bewegungfreiheit des ersten Trägers bezüglich des zweiten Trägers in Lichtwellenleiterlängsrichtung. Beispielsweise durch einen zusätzlichen Anschlag auf dem zweiten Träger wird der erste Träger auch in diesem Freiheitsgrad positioniert. Vorteilhafterweise werden die Träger nach erfolgtem Zusammenfügen und Ausrichten durch ein Klebemittel miteinander dauerhaft verbunden. Thermische Spannungen werden bei dieser Montage vermieden und können nicht zu einer Dejustierung der beiden Träger führen.

Der Wandler ist bezüglich der schrägen Flächen auf dem zweitem Träger vorjustiert und mit diesem Träger fest verbunden. Die bei Wandlern, beispielsweise bei Laserdioden mit Vertikalresonator, auftretende Verlustwärme wird über einen großflächigen Kontakt des Wandlers mit dem zweiten Träger abgeleitet. Der erste Träger ist aus einem Kunststoff, beispielsweise mittels Abformtechniken, mit der geforderten Genauigkeit hergestellt, wobei die auf dem ersten Träger angeordneten schrägen Flächen und die Lichtwellenleiter in einer räumlich definierten Anordnung zueinander sind. Die Ausrichtung der Lichtwellenleiter bezüglich der auf dem ersten Träger befindlichen Flächen einerseits und des Wandlers bezüglich der auf dem zweiten Träger angeordneten Flächen andererseits ist so gewählt, das nach erfolgtem Zusammenfügen der beiden Träger die Lichtwellenleiter und der Wandler zueinander ausgerichtet sind und eine optische Signalkopplung durch Reflexion an der Schräge erfolgt. Die Positionierung des Wandlers und der Lichtwellenleiter auf dem jeweiligen Träger kann beispielsweise durch an sich bekannte, hochpräzise mechanische Ablage, mittels Lötbumps oder mechanischer Form- und Anschlagelemente erfolgen. Das im Lichtwellenleiter geführte Signal kann an der Stirnfläche des Lichtwellenleiters totalreflektiert und zum Wandler umgelenkt werden.

Ein weiterer Vorteil der erfindungsgemäßen Anordnung besteht darin, daß die beiden Träger als Teilbaugruppen getrennt montierbar und unabhängig voneinander vor der Endmontage prüfbar sind. Eine fehlerhafte Teilbaugruppe führt daher nicht zu einer erst nach der Montage erkennbaren fehlerhaften Gesamtbaugruppe.

Eine vorteilhafte Ausführungsform zeichnet sich dadurch aus, daß auf dem ersten Träger eine prismatische Vertiefung und auf dem zweiten Träger eine prismatische Erhebung mit geneigten Seitenflächen angeordnet ist, wobei die Seitenflächen der Vertiefung und der Erhebung jeweils die schrägen Flächen bilden. Der erste Träger ruht mit seiner Ausnehmung auf der prismatischen Erhebung des zweiten Trägers, wobei die jeweiligen Seitenflächen plan aufeinander liegen. Die Seitenflächen der Erhebung sind zueinander gekippt, so daß die Träger lateral und vertikal zueinander ausgerichtet sind.

Eine weitere vorteilhafte Ausführungsform zeichnet sich dadurch aus, daß der zweite Träger aus einem Material mit annähernd gleichem thermischen Ausdehnungskoeffizient wie der erste Träger besteht. Mechanische Spannungen, die nach dem Verbinden beider Träger durch eine eventuelle Erwärmung infolge der Verlustleistung auftreten könnten, sind durch das gleiche thermische Ausdehnungsverhalten beider Trägermaterialien vermieden. Gleichzeitig wird eine thermisch bedingte Dejustage von Lichtwellenleiter zu Wandler verhindert.

Eine weitere vorteilhafte Ausführungsform zeichnet sich dadurch aus, daß die Lichtwellenleiter in Nuten an einer Unterseite des ersten Trägers angeordnet sind und mit ihren kopplungsseitigen Stirnflächen bündig mit einer schrägen Polierfläche des ersten Trägers abschließen. In derartige Nuten können beispielsweise vorkonfektionierte Lichtwellenleiter eingebracht werden. Nachfolgend werden die Lichtwellenleiter zusammen an der Polierfläche poliert, wobei in exakt definierter Abschrägung Stirnseiten der Lichtwellenleiter entstehen, an denen Lichtsignale totalreflektiert werden. Ferner können die Stirnseiten gemeinsam mit der Polierfläche verspiegelt oder mit einem Schutzüberzug versehen werden.

Eine weitere vorteilhafte Ausführungsform zeichnet sich dadurch aus, daß die Lichtwellenleiter jeweils eine zweite Stirnfläche aufweisen, die mit einer weiteren Polierfläche des ersten Trägers bündig abschließt. Über diese Stirnflächen ist eine optische Kopplung der Lichtwellenleiter mit weiteren Lichtwellenleitern oder einem anderen Wandler möglich. Durch die gemeinsame Bearbeitung von diesen Lichtwellenleiterstirnflächen und der weiteren Polierfläche entsteht eine geeignete Anschlagfläche, an der beispielsweise ein mehrkanaliges Lichtwellenleiterkabel an die Lichtwellenleiter angekoppelt werden kann. Die unmittelbar an den trägerseitigen Wandler angekoppelten Lichtwellenleiter sind dabei mechanisch von dem Lichtwellenleiterkabel getrennt. Dadurch wird eine mechanische Belastung der Kopplung zwischen Lichtwellenleiter und Wandler aufgrund eventuell auftretender Zugkräfte am Lichtwellenleiterkabel vermieden.

Eine weitere vorteilhafte Ausführungsform zeichnet sich dadurch aus, daß der erste Träger parallel zur Ebene der Lichtwellenleiter ausgerichtete Führungsmittel aufweist. Diese dienen beispielsweise der Ausrichtung eines Lichtwellenleitersteckers bezüglich der koppelbaugruppeneigenen Lichtwellenleiter.

Eine weitere vorteilhafte Ausführungsform zeichnet sich dadurch aus, daß die Lichtwellenleiter von in Nuten eingebrachtem Material mit einem Brechungsindex gebildet sind, der größer als der Brechungsindex des Kunststoffmaterials des ersten Trägers ist. Dazu wird zunächst das Material in die Nuten eingearbeitet und nachfolgend verfestigt. In einem weiteren Schritt werden beide Stirnflächen an der schrägen Polierfläche bzw. an der weiteren Polierfläche bearbeitet und poliert.

Im folgenden wird die Erfindung an Hand eines zeichnerisch dargestellten Ausführungsbeispiels weiter beschrieben; es zeigen:
- Figur 1: eine erfindungsgemäße elektrooptische Koppelbau gruppe in Explosionsdarstellung und
- Figur 2: die Koppelbaugruppe im zusammengefügten Zustand.

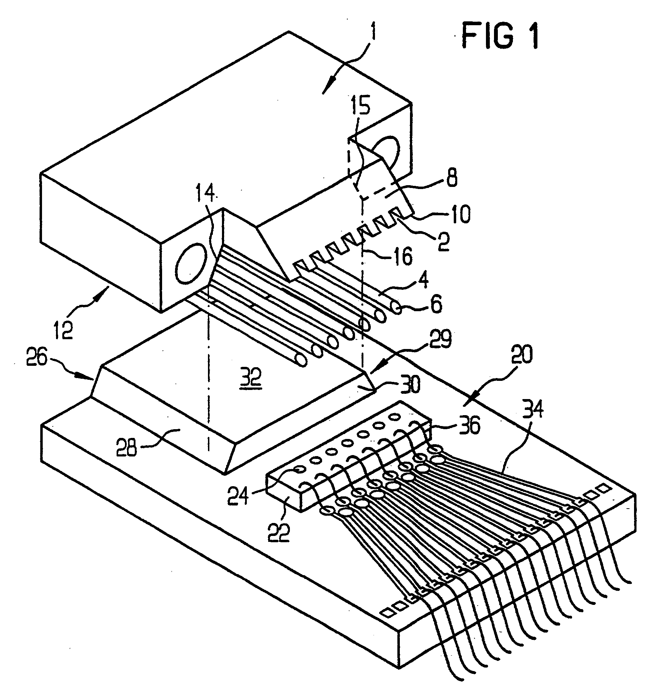

Die Koppelbaugruppe umfaßt einen ersten Träger 1 und einen zweiten Träger 20, wobei sich der erste Träger 1 in der Darstellung nach Figur 1 oberhalb des zweiten Trägers 20 befindet. Im Kunststoffmaterial des ersten Trägers 1 ist an der dem zweiten Träger 20 zugewandten Seite eine symmetrische trapezförmige Vertiefung 16 ausgeformt. Das Querschnittsprofil der Vertiefung 16 ist so gewählt, daß deren geneigte Seitenflächen 14, 15 in einer Dimension parallel zur Unterseite des Trägers 1 verlaufen und sich die Vertiefung 16 zum Träger 20 hin aufweitet. An der in der Vertiefung 16 befindlichen Unterseite 10 des Trägers 1 sind zueinander parallel verlaufende Nuten 2 ausgebildet, die parallel zu den Seitenflächen 14 ausgerichtet sind. In diese Nuten 2 sind Lichtwellenleiter 4 eingebracht, die mit ihren kopplungsseitigen Stirnflächen 6 bündig mit einer schrägen Polierfläche 8 abschließen. Auf dem zweiten Träger 20 ist einstückig eine symmetrische trapezförmige Erhebung 30 ausgeformt. Die Seitenflächen 28, 29 der Erhebung 30 sind so ausgerichtet, daß beim Zusammenfügen der beiden Träger 1 und 20 die Seitenflächen 14, 15 der Vertiefung 16 flächig auf den Seitenflächen 28, 29 der Erhebung 30 ruhen. Dadurch werden die beiden Träger 1 und 20 zueinander ausgerichtet. Die Lichtwellenleiter 4 liegen im zusammengefügten Zustand der beiden Träger 1 und 20 oberhalb der Deckplatte 32 der prismatischen Erhebung 30. Durch die Ausrichtung der beiden Träger 1 und 20 zueinander werden gleichzeitig die kopplungsseitigen Stirnflächen 6 der Lichtwellenleiter 4 auf die optisch aktiven Oberflächen 24 eines elektrooptischen Wandlers 22 ausgerichtet, der auf dem Träger 20 angeordnet und bezüglich der geneigten erhebungsseitigen Seitenwände 28 z. B. durch präzise mechanische Chipablage positioniert ist. Der Wandler 22 ist auf dem Träger 20 rückseitig vormontiert und über Metallisierungen 34 und Bonddrähte 36 elektrisch kontaktiert. Durch den zweiteiligen Aufbau der Koppelbaugruppe kann der Wandler 22 vor der endgültigen Montage beider Träger 1 und 20 auf Funktionsfähigkeit überprüft werden. Gleiches gilt für die Lichtwellenleiter 4, die unabhängig von dem Träger 20 z. B. auf Material- und Verarbeitungsfehler nach deren Einfügen in die Nuten 2 überprüft werden können. Vorteilhaft ist weiterhin das gemeinsame Polieren von kopplungsseitigen Stirnflächen 6 der Lichtwellenleiter 4 mit der schrägen Polierfläche 8. Nachdem die Lichtwellenleiter 4 in den Nuten 2, beispielsweise durch Kleben, fixiert sind, können die Stirnflächen 6 einfach bearbeitet werden.

Der Winkel, den die Polierfläche 8 mit der Längsachse der Lichtwellenleiter 4 einschließt, ist so gewählt, daß eine Strahlumlenkung durch Totalreflektion an den Stirnflächen 6 erfolgt und die Lichtwellenleiter 4 mit den optisch aktiven Oberflächen 24 des Wandlers 22 optisch gekoppelt sind. Zum Schutz der Stirnflächen 6 können diese mit einer Schutzschicht bzw. mit einem spiegelnden Überzug versehen werden.

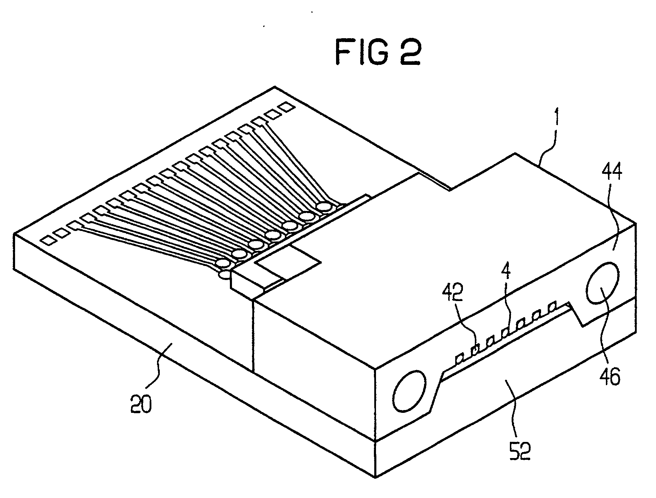

Figur 2 zeigt die Koppelbaugruppe im zusammengefügten Zustand. Nachdem die beiden Träger 1 und 20 mittels eines Klebers dauerhaft miteinander verbunden sind, werden die Lichtwellenleiter 4 an einer weiteren auf dem Träger 1 angeordneten Polierfläche 44 bearbeitet. Dabei entstehen Stirnflächen 42, die bündig mit der Polierfläche 44 abschließen. Gleichzeitig wird mit dem Polieren der Lichtwellenleiter 4 eine Stirnfläche 52 des Trägers 20 bearbeitet, so daß die Stirnflächen 42, die Polierfläche 44 und die Fläche 52 in einer Ebene liegen und eine gemeinsame Anschlagfläche bilden. Zur Ausrichtung eines Steckpartners sind Bohrungen (Führungsmittel) 46 parallel zu den Lichtwellenleitern 4 in den Träger 1 eingearbeitet. Diese Bohrungen 46 wechselwirken mit nicht gezeigten steckpartnerseitigen Ausrichtstiften, wodurch steckpartnerseitige Lichtwellenleiter oder Wandlerelemente bezüglich der Stirnflächen 42 der Lichtwellenleiter 4 ausgerichtet werden. Dadurch wird einerseits die optische Signalweiterleitung mittels Lichtwellenleiterkabel ermöglicht, andererseits kann die Koppelbaugruppe durch Kopplung mit einem Empfänger auf Funktionsfähigkeit überprüft werden. Gleichzeitig kann die Koppelbaugruppe in modular aufgebauten Signaleinrichtungen eingesetzt werden und bei einem eventuell auftretenden Ausfall einer Koppelbaugruppe diese einfach durch eine neue ersetzt werden.

## Patentansprüche

1. Elektrooptische Koppelbaugruppe
- mit einem ersten Träger (1) mit Ausrichtmitteln (12) und mit mehreren in einer Ebene angeordneten Lichtwellenleitern (4), deren kopplungsseitige Stirnflächen (6) eine Strahlumlenkung auf den Lichtwellenleitern (4) zugeordnete optisch aktive Oberflächen (24) eines mehrkanaligen elektrooptischen Wandlers (22) bewirken, und
- mit einem zweiten Träger (20) mit auf die Ausrichtmittel (12) des ersten Trägers (1) abgestimmten weiteren Ausrichtmitteln (26), auf dem der elektrooptische Wandler (22) unabhängig von den Lichtwellenleitern (4) und präzise in bezug auf die weiteren Ausrichtmittel (26) positioniert ist,
**dadurch gekennzeichnet, daß**
der erste Träger (1) ein Kunststofformkörper ist und daß die Ausrichtmittel (12, 26) von korrespondierenden schrägen Flächen (14, 28) auf beiden Trägern (1, 20) gebildet sind, wobei sich die Flächen (14, 28) in einer Dimension parallel zu den Längsachsen der Lichtwellenleiter (4) erstrecken, wobei die Flächen (14, 28) in Ebenen liegen, die die Ebene der Lichtwellenleiter (4) schneiden und wobei die Flächen (14, 28) einen Formschluß bewirken, wodurch die Stirnflächen (6) gegenüber den optisch aktiven Oberflächen (24) lateral justiert sind.

2. Koppelbaugruppe nach Anspruch 1,
**dadurch gekennzeichnet, daß**
auf dem ersten Träger (1) eine prismatische Vertiefung (16) und auf dem zweiten Träger (20) eine prismatische Erhebung (30) mit geneigten Seitenflächen angeordnet ist, wobei die Seitenflächen der Vertiefung (16) und der Erhebung (30) jeweils die schrägen Flächen (14, 28) bilden.

3. Koppelbaugruppe nach einem der Ansprüche 1 oder 2,
**dadurch gekennzeichnet, daß**
der zweite Träger (20) aus einem Material mit annähernd gleichem thermischen Ausdehnungskoeffizienten wie der erste Träger (1) besteht.

4. Koppelbaugruppe nach einem der vorangehenden Ansprüche,
**dadurch gekennzeichnet, daß**
die Lichtwellenleiter (4) in Nuten (2) an einer Unterseite (10) des ersten Trägers (1) angeordnet sind und mit ihren kopplungsseitigen Stirnflächen (6) bündig mit einer schrägen Polierfläche (8) des ersten Trägers (1) abschließen.

5. Koppelbaugruppe nach einem der vorangehenden Ansprüche,
**dadurch gekennzeichnet, daß**
die Lichtwellenleiter (4) jeweils eine zweite Stirnfläche (42) aufweisen, die mit einer weiteren Polierfläche (44) des ersten Trägers (1) bündig abschließen.

6. Koppelbaugruppe nach einem der vorangehenden Ansprüche,
**dadurch gekennzeichnet, daß**
der erste Träger (1) parallel zur Ebene der Lichtwellenleiter (4) ausgerichtete Führungsmittel (46) aufweist.

7. Koppelbaugruppe nach einem der vorangehenden Ansprüche,
**dadurch gekennzeichnet, daß**
die Lichtwellenleiter (4) von in Nuten (2) eingebrachtem Material mit einem Brechungsindex gebildet sind, der größer als der Brechungsindex des Kunststoffmaterials des ersten Trägers (1) ist.

## Claims

1. Electrooptical coupling assembly
- having a first base (1) with alignment means (12) and with a number of optical conductors (4) which are arranged in a plane and whose coupling-side end faces (6) cause beam deflection onto optically active surfaces (24), which are associated with the optical conductors (4), of a multichannel electrooptical transducer (22), and
- with a second base (20) with further alignment means (26) which are matched to the alignment means (12) of the first base (1) and on which the electrooptical transducer (22) is positioned, independently of the optical conductors (4) and precisely with respect to the further alignment means (26), characterized in that the first base (1) is a plastic moulding and in that the alignment means (12,26) are formed by corresponding oblique surfaces (14,28) on both bases (1,20), with the surfaces (14,28) extending in one direction parallel to the longitudinal axes of the optical conductors (4), with the surfaces (14,28) lying in planes which intersect the plane of the optical conductors (4) and with the surfaces (14,28) producing a positive lock, by which means the end faces (6) can be adjusted laterally with respect to the optically active surfaces (24).

2. Coupling assembly according to Claim 1,
characterized in that
a prismatic depression (16) is arranged on the first base (1) and a prismatic projection (30) is arranged on the second base (20), both having inclined side surfaces, with the side surfaces of the depression (16) and of the projection (30) each forming the oblique surfaces (14,28).

3. Coupling assembly according to one of Claims 1 or 2,
characterized in that
the second base (20) is composed of a material having approximately the same thermal coefficient of expansion as that of the first base (1).

4. Coupling assembly according to one of the preceding claims,
characterized in that
the optical conductors (4) are arranged in grooves (2) on a lower face (10) of the first base (1), and their coupling-side end faces (6) terminate flush with an oblique polished surface (8) of the first base (1).

5. Coupling assembly according to one of the preceding claims,
characterized in that
the optical conductors (4) each have a second end face (42), which second end faces (42) terminate flush with a further polished surface (44) of the first base (1).

6. Coupling assembly according to one of the preceding claims,
characterized in that the first base (1) has guide means (46) which are aligned parallel to the plane of the optical conductors (4).

7. Coupling assembly according to one of the preceding claims,
characterized in that
the optical conductors (4) are formed by a material which is incorporated into grooves (2) and has a refractive index which is higher than the refractive index of the plastic material of the first base (1).

## Revendications

1. Module de couplage électro-optique
- comprenant un premier support (1) ayant des moyens (12) d'alignement et ayant plusieurs guides (4) d'ondes lumineuses disposés dans un plan, dont les surfaces (6) frontales du côté du couplage provoquent une déviation du rayonnement sur les surfaces (24), optiquement actives et associées aux guides (4) d'ondes lumineuses, d'un transducteur (22) électro-optique ayant une multiplicité de canaux, et
- comprenant un deuxième support (20) ayant d'autres moyens d'alignement accordés aux moyens (12) d'alignement du premier support (1), support (20), sur lequel le transducteur (22) électro-optique est mis en position indépendamment des guides (4) d'ondes lumineuses, et de manière précise par rapport aux autres moyens (26) d'alignement, caractérisé en ce que le premier support (1) est une pièce moulée en matière plastique, et en ce que les moyens (12, 26) d'alignement sont formés par des surfaces (14, 28) inclinées correspondantes sur les deux supports (1, 20), les surfaces (14, 28) s'étendant dans une dimension parallèlement aux axes longitudinaux des guides (4) d'ondes lumineuses, les surfaces (14, 28) se trouvant dans un plan, qui coupe le plan des guides (4) d'ondes lumineuses et les surfaces (14, 28) donnant une liaison par complémentarité de forme, grâce à laquelle les surfaces (6) frontales sont ajustées latéralement par rapport aux surfaces (24) optiquement actives.

2. Module de couplage suivant la revendication 1,
caractérisé en ce qu'il est prévu sur le premier support (1), une cavité (16) prismatique et sur le deuxième support (20), une surélévation (30) prismatique ayant des surfaces latérales inclinées, les surfaces latérales de la cavité (16) et de la surélévation (30) formant respectivement les surfaces (14, 28) inclinées.

3. Module de couplage suivant l'une des revendications 1 ou 2, caractérisé en ce que le deuxième support (20) est en un matériau ayant sensiblement le même coefficient de dilatation thermique que le premier support (1).

4. Module de couplage suivant l'une des revendications précédentes, caractérisé en ce que les conducteurs (4) d'ondes lumineuses sont disposés dans des gorges (2) sur une face inférieure (10) du premier support (1), et viennent à affleurement par leur surface (6) frontale du côté du couplage, avec une surface (8) inclinée polie du premier support (1).

5. Module de couplage suivant l'une des revendications précédentes, caractérisé en ce que les guides (4) d'ondes lumineuses comportent respectivement une deuxième surface (42) frontale, qui vient à affleurement avec une autre surface (44) polie du premier support (1).

6. Module de couplage suivant l'une des revendications précédentes, caractérisé en ce que le premier support (1) comporte parallèlement au plan des guides (4) d'ondes lumineuses, des moyens (46) de guidage alignés.

7. Module de couplage suivant l'une des revendications précédentes, caractérisé en ce que les guides (4) d'ondes lumineuses sont formés par de la matière introduite dans des gorges (2), et ayant un indice de réfraction qui est plus grand que l'indice de réfraction de la matière plastique du premier support (1).
